# EUROPÄISCHE PATENTSCHRIFT

(11) **EP 0 433 590 B1**
(45) Veröffentlichungstag und Bekanntmachung des Hinweises auf die Patenterteilung: **21.09.1994**
(21) Anmeldenummer: 90119375.5
(22) Anmeldetag: 10.10.1990
(51) Int. Cl.: A21B 5/02

(54) **Verfahren zum Herstellen von Waffeln, Vorrichtung zur Durchführung des Verfahrens und Waffel**
Method of producing waffels, device for carrying out the method and waffel
Procédé de production de gauffres et appareil pour la réalisation du procédé, et gauffre

(30) Priorität: 20.12.1989 DE 3941987; 09.06.1990 DE 4018513
(43) Veröffentlichungstag der Anmeldung: 26.06.1991
(73) Patentinhaber: Firma Karl Oexmann Inh. Wolfgang Oexmann, 45881 Gelsenkirchen (DE)
(72) Erfinder: Herting, Heinrich, W-4690 Herne 1 (DE)
(74) Vertreter: Ostriga, Harald

(56) Entgegenhaltungen:
- DE-A- 3 817 919
- DE-C- 2 719 445

## Beschreibung

Die Erfindung betrifft zunächst ein Verfahren zum Herstellen von Waffeln entsprechend dem Oberbegriff des Patentanspruchs 1. Ein solches Verfahren ist durch die DE 38 17 919 A1 bekanntgeworden.

Entsprechend dem bekannten Verfahren wird zunächst ein eingefärbter Musterteig auf die bereits Backtemperatur aufweisende Backfläche aufgegossen und hierbei ein Muster, wie z.B. Streifen, Spiralen, Kreise od.dgl., hergestellt. Sodann läßt man den Musterteig eine Weile, z.B. ca. 15 Sekunden, anbacken. Sobald dies geschehen ist, wird der ungefärbte Hauptwaffelteig auf dieselbe Backfläche gegossen und die Backform geschlossen. Beim Schließen der Backform verteilt sich der ungefärbte Teig über den gesamten Hohlraum zwischen den beiden Backflächen der geschlossenen Backform und verbindet sich mit dem gefärbten, bereits angebackenen Musterteig. Die Waffel wird sodann für 1,5-2 Minuten in der geschlossenen Waffelbackform fertiggebacken und anschließend aus der geöffneten Backform entnommen.

Als Anbackzeit benennt die DE 38 17 919 A1 einen Zeitraum von 3-30 Sekunden, wobei ein Zeitraum von 5-20 Sekunden bevorzugt wird.

Bezüglich der vorstehenden Ausführungen wird verwiesen auf die DE 38 17 919 Sp. 4, Zeilen 24-27 und Zeilen 48-62.

Das von der DE 38 17 919 A1 bekannte Verfahren wird insbesondere sowohl im Hinblick auf moderne, schnellaufende Waffelbackmaschinen als auch im Hinblick auf die mit dem bekannten Verfahren zu erzielende Qualität der Muster als verbesserungsbedürftig empfunden. Für den Fall insbesondere nämlich, daß das angestrebte Muster beispielsweise flächig sein soll, erfordert das bekannte Verfahren eine relativ große Teigmenge mit einer entsprechend langen Anbackzeit. Andererseits sucht man nach einem Weg, auch Muster mit einem mehr feinen, filigranen Aussehen zu erzeugen, was mit dem bekannten Verfahren indes nicht erzielbar ist, das nur verhältnismäßig grobe Muster, vergleichbar den Dressierarbeiten bei Süßwaren, ermöglicht.

Ausgehend von dem durch die DE-A 38 17 919 bekannten Verfahren, hat sich die Erfindung die Aufgabe gestellt, einen gänzlich anderen Weg zu beschreiten, der eine raschere Arbeitsweise und darüber hinaus präzis abbildbare Muster gestattet.

Entsprechend der Erfindung ist diese Aufgabe dadurch gelöst worden, daß der Hauptteig eine größere und der Musterteig eine geringe Viskosität aufweisen, wobei der Musterteig als verlauffreie hauchdünne Schicht aufgesprüht wird und daß der Hauptteig, solange der Musterteig noch auf seiner Backfläche haftet, mit dem Musterteig verbunden wird.

In der Praxis bedeutet dies, daß der nur eine geringe Viskosität (etwa die Viskosität dünnen Speiseöls) aufweisende Musterteig auf die bereits Backtemperatur aufweisende Backfläche aufgesprüht und dadurch die Möglichkeit zu einer hauchdünnen Schicht geschaffen wird, deren Einzelbackzeit - im Unterschied zu einem aufgegossenen Musterteig gemäß der DE 38 17 919 A1 - nur verschwindend gering ist. Unmittelbar nach dem Sprühvorgang, nämlich etwa eine Sekunde danach, wird nämlich der eine größere Viskosität als der Musterteig aufweisende Hauptteig aufgegossen. Das Aufgießen des Hauptteiges kann zwar auch etwas später geschehen, beispielsweise nach 3 bis 5 Sekunden, jedoch muß sichergestellt sein, daß der hauchdünne Musterteig sich noch nicht von der Backfläche abgehoben hat, d.h. noch an der Backfläche anhaftet. Dieses unbedingt einzuhaltende, nur zeitlich begrenzte Anhaftvermögen des Musterteiges ist wichtig, weil ansonsten der bereits von der Backfläche abgehobene Musterteig bei Aufgießen des Hauptteiges, ganz zu schweigen von der anschließend entstehenden Teig- und Wasserdampfverdrängung in der geschlossenen Backform, verschoben und somit eine Musterabbildung mangelhaft würde.

Überraschend ist, daß der anschließend aufgegossene Hauptteig trotz der nach Schließen der Backform auftretenden Teig- und Wasserdampfverdrängung den hauchdünnen Musterteig selbst nicht durchdringt. Unbeeinflußt hiervon zeigt die fertige Waffel vielmehr ein deutlich kontrastierendes, scharf abgebildetes Muster.

Das zeitlich unmittelbar folgende Aufgießen des Hauptteiges auf den bereits eine anfängliche Verfestigung aufweisenden hauchdünnen Film des Musterteiges sorgt zugleich für dessen Kühlung, verhindert also dessen unzulässig hohe Erhitzung.

Das Aufbringen des Musterteiges durch Aufsprühen erbringt den weiteren Vorteil, daß durch den Sprühvorgang an sich verlauffreie scharfe Konturen der hauchdünn erzeugten Musterteig-Schicht erzielt werden können. Hierbei kann der Musterteig taktweise auf die Backfläche gesprüht werden. Dieses kann z.B. so geschehen, daß die Sprühdüse sehr schnell nach jedem Sprühtakt in eine andere Relativposition bezüglich der Backfläche weitergetaktet wird.

Von der DE-A-2 719 445 ist es in Verbindung mit rotierenden Backscheiben, die vornehmlich der Herstellung von Omeletten dienen, bekannt, Fett oder Speiseöl mittels Düsen auf die Backscheiben zu sprühen. Ein derartiger Fett- oder Ölauftrag muß insgesamt flächendeckend über die Backfläche hinweg erfolgen, um später ein Trennen des fertigen Gebäcks von der Backfläche zu gewährleisten. Der bekannte flächige Fett- bzw. Öl-Sprühauftrag ist demnach nicht mit der Erfindung vergleichbar, welche sich mit der Herstellung scharf begrenzter Muster durch gezieltes Aufsprühen eines musterbildenden Teiges befaßt.

Überhaupt gestattet das erfindungsgemäße Verfahren sowohl die Anwendung stationärer, kontinuierlich bewegter, z.B. umlaufender, oder auch diskontinuierlich taktweise bewegter, insbesondere auch umlaufender, Backformen-Bahnen oder irgendwelcher Backformen-Gruppierungen. Das erfindungsgemäße Verfahren ist daher sowohl in Verbindung mit Backketten als auch in Verbindung mit Backrädern anwendbar.

In weiterer Ausgestaltung der Erfindung wird der Musterteig bahnenweise auf die Backfläche gesprüht, bevor der Hauptteig aufgegossen wird. Hierdurch lassen sich großflächig voneinander abhebende bahnförmige Muster erzielen.

Das erfindungsgemäße Verfahren ist nicht nur in Verbindung mit ebenen Waffeln, sondern auch in Verbindung mit räumlich gekrümmten Waffel-Backflächen (Becher, Schalen, Konen etc.) verwendbar. Die Erfindung gestattet es auch, daß die mit einem erfindungsgemäßen Muster hergestellten, noch warmen und formbaren Waffelblätter anschließend zu Waffeltüten oder Waffelröllchen gewickelt werden.

Ein gleichmäßiger Auftrag des Musterteiges wird entsprechend anderen Merkmalen der Erfindung dadurch erzielt, daß das Aufsprühen des Musterteiges mittels einer oszillierenden Sprühbewegung durchgeführt wird.

Die wichtigste Ausführungsform des Verfahrens besteht erfindungsgemäß darin, daß der Musterteig durch je eine Schablone hindurch auf die Backfläche gesprüht wird. Mit dieser erfindungsgemäßen Ausgestaltung des Verfahrens lassen sich - je nach Schablone - beliebige Abbildungen auf Waffeloberflächen produzieren.

Bei kontinuierlich umlaufenden Waffelbackformen, beispielsweise bei kontinuierlich umlaufenden Waffelbackrädern oder Waffelbackketten, hat es sich als zweckmäßig erwiesen, daß bei bewegten Backformen vor dem Schließen derselben die Schablone synchron über eine kurze Wegstrecke mit der Backform mitgeführt und auf dieser Wegstrecke der Musterteig auf die Backfläche gesprüht wird.

Eine Eigenart des erfindungsgemäßen Verfahrens besteht auch darin, daß dieses - im Gegensatz zum bekannten Verfahren gemäß der DE 38 17 919 A1 - völlig unabhängig von der räumlichen Position der Backfläche verwendet werden kann. So gestattet es das erfindungsgemäße Verfahren auch, vertikale Backflächen zu besprühen, da die hauchdünn aufgesprühte Schicht auf der heißen Backfläche sogleich, praktisch schlagartig, ihre flüssige Konsistenz verliert, sich also anfänglich verfestigt und dadurch unabhängig von der räumlichen Position der Backfläche völlig verlauffrei ist.

In diesem Zusammenhang besteht eine besondere Ausgestaltung des erfindungsgemäßen Verfahrens darin, daß die jeweilige Schablone bezüglich der unteren und/oder der oberen Backfläche mit einem geringen Abstand einjustiert und hierbei der Musterteig auf die jeweils benachbarte Backfläche gesprüht wird. Der gleichbleibende geringe Abstand, z.B. durch distanziertes Anlehnen der Schablone an die Backfläche, gestattet reproduzierbare Musterergebnisse.

Hierbei läßt es die Erfindung auch zu, daß jeweils zwei Schablonen gleichzeitig, d.h. eine Schablone bezüglich der unteren Backfläche und eine Schablone bezüglich der oberen Backfläche, einjustiert und zur gleichen Zeit von dem Musterteig durchsprüht werden. Diese Ausgestaltung des Verfahrens ermöglicht eine sowohl ober- als auch unterseitig mit einem Muster versehene Waffel, wobei beide Muster selbstverständlich unterschiedlich sein können.

Weiterhin sieht die Erfindung vor, daß die jeweilige Schablone nach dem Aufsprühen des Musterteigs aus der Bewegungsbahn der offenen Backform herausgeführt wird.

Nach dem Sprühvorgang wird jede Schablone zweckmäßig einem Reinigungskreislauf zugeführt.

Die Erfindung betrifft weiterhin eine Vorrichtung zur Durchführung des Verfahrens entsprechend dem Oberbegriff des Patentanspruchs 11, welcher von den der DE-A 38 17 919 A1 entnehmbaren Vorrichtungsmerkmalen ausgeht.

Die erfindungsgemäße Weiterentwicklung, welche eine rascher arbeitende und präzisere Muster herstellende Vorrichtung ermöglicht, besteht gemäß dem Kennzeichenteil des Patentanspruchs 11 darin, daß die Backfläche der jeweiligen Backplatte mittels einer den Musterteig versprühenden Sprühdüse beaufschlagbar ist.

Weitere Ausgestaltungen der erfindungsgemäßen Vorrichtung ergeben sich aus den Ansprüchen 12-20.

Die Erfindung betrifft außerdem eine Waffel, wie Einzelwaffel od.dgl., entsprechend dem Oberbegriff des Anspruchs 21, welcher von einer Waffel ausgeht, die aus der DE 38 17 919 A1 entnehmbar ist. Ausgehend von dieser bekannten Waffel, ist es Aufgabe der Erfindung, eine Waffel zu schaffen, welche bei leichter, rascher Herstellbarkeit eine präzise Musterung gestattet. Diese Aufgabe ist entsprechend dem Kennzeichenteil des Anspruchs 21 dadurch gelöst worden, daß der Musterteig eine im Verhältnis zum Hauptteig hauchdünne Schicht bildet, deren Stärke 0,04-008 mm, vorzugsweise 0,06-0.08 mm beträgt.

Ergänzend sei noch bemerkt, daß die Konsistenz des Musterteiges, aus dem die gebackene Musterteig-Schicht erbacken wird, relativ dünnflüssig ist, etwa vergleichbar der Viskosität dünnen Speiseöls. Eine zweckmäßige Viskosität des Musterteiges ergibt sich bei 100 kg Feststoff (z.B. Mehl, Zucker und Fett) unter Zusatz von 130 kg-160 kg Wasser, vorzugsweise etwa 140-150 kg Wasser. Der übliche Hauptteig größerer Viskosität hingegen enthält nur 80 kg Wasser auf 100 kg Feststoff.

Während die hauchdünne Schicht des gebackenen Musterteigs entsprechend weiteren Merkmalen der Erfindung 0,04-0,08 mm, vorzugsweise 0,06-0,08 mm, beträgt, kann der Hauptwaffelkörper alle üblichen Stärken von etwa 1 mm oder weniger bis zu etwa 10 mm oder darüber hinaus (z.B. Brüsseler Waffeln) besitzen.

Ein wesentlicher Aspekt der erfindungsgemäßen Waffel wird dadurch erzielt, daß der Musterteig gemäß den Ansprüchen 22 bis 24 eine im Vergleich zum üblichen Teig wesentlich höhere Dosis an Natron und/oder an Milchzucker enthält. Hierdurch wird nämlich eine thermische Färbung des Musterteiges, also je nach Zugabe der vorgenannten Mittel, ein helles Braun bis zu einem satten dunklen Braun des Musterteiges erzielt, ohne daß andere färbende Zusatzstoffe vonnöten wären, welche die Erfindung andererseits nicht ausschließt.

In den Zeichnungen sind bevorzugte Ausführungsbeispiele näher dargestellt, es zeigt,
Fig. 1 eine schematische Draufsicht auf einen Teil einer Waffelbackmaschine,
Fig. 2 und 3 verschiedene Ansichten entsprechend den mit II bzw. III bezeichneten Ansichtspfeilen in Fig. 1,
Fig. 4 eine spezielle Ausführungsform, die das Versprühen von Musterteig darstellt und
Fig. 5 einen schematischen Querschnitt durch eine Waffel.

Die in den Zeichnungen nur teilweise dargestellte Waffelbackmaschine 10 weist eine Backkette 11 auf, welche einzelne Backformen 12 trägt, die jeweils aus einer unteren Backplatte 13 und aus einer oberen Backplatte 14 bestehen, die über ein Klappgelenk 15 miteinander verbunden und deshalb zu öffnen und zu schließen sind. Die untere Backplatte 13 ist von Verbindungsteilen 16, welche die Verbindung zur eigentlichen Backkette 11 (Rollenkette, Stahlgliederkette od.dgl.) herstellen, getragen.

Eine nicht dargestellte, bekannte Kulissenanordnung sorgt dafür, daß die Backformen 12 der entsprechend der Bewegungsrichtung x bewegten und umlaufend geführten, ein Ober- und ein Untertrum aufweisenden Backkette 11, geöffnet und wieder geschlossen werden. So ist beispielsweise die Backform 12 in der dargestellten Position a geschlossen, die mit der Position b halb geöffnet, die mit den Positionen c, d, e ganz geöffnet, die mit der Position f wiederum halb geöffnet und die mit der Position g ganz geschlossen.

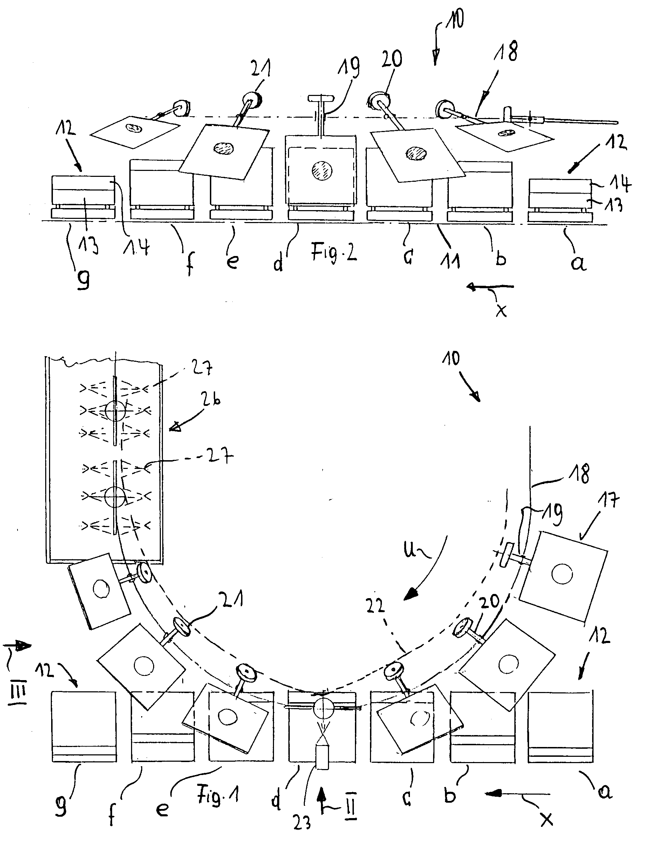

In einer Ebene oberhalb der Backkette 11 ist eine Schablonen 17 tragende Schablonenkette 18 - beispielsweise in einer horizontalen Ebene - umlaufend geführt, was aus den Fig. 1-3 teilweise zu ersehen ist. Die einzelnen ebenen, blattförmigen Schablonen 17 sind auf der Schablonenkette 18 bei 19 an doppelhebelartigen Fortsätzen 20 mittig gelenkig gelagert, welche jeweils endseitig eine Kulissenrolle 21 tragen. Die Kulissenrollen 21 sind mittels einer nur gestrichelt angedeuteten Kulisse 22 zwangsgeführt, welche den Schablonen 17 die erforderliche Bewegung aufprägt.

So werden die Schablonen 17 aus einer etwa horizontalen Lage ihrer Schablonenblätter während der Umlaufbewegung entsprechend dem Umlaufpfeil U über die Positionen b und c in eine vertikale Stellung gemäß der Position d verschwenkt, in welcher die Musterteig-Sprühdüse 23 kurzzeitig eingeschaltet wird, welche die obere Backfläche 24 mit einer hauchdünnen musterbildenden Schicht besprüht.

Unmittelbar nach dem Sprühvorgang wird mit einem möglichst steil verlaufenden Kulissenabschnitt der Kulisse 22 die Schablone 17 nach dem Sprühvorgang möglichst rasch hochgeschwenkt, so daß in nicht dargestellter Weise (z.B. mit einem Füllrohr) in der Position e der Hauptteig auf die untere Backfläche 25 aufgegossen werden kann.

Nach diesem Vorgang schließt sich die sowohl den Musterteig als auch den Hauptteig enthaltende jeweilige Backform 12 über die Positionen f und g hinweg und gelangt sodann in einen nicht dargestellten Backofen, beispielsweise in einen Durchlaufofen.

Die Kulisse 22 ist weiterhin so gestaltet, daß die einzelnen Schablonen 17 nacheinander in eine Reinigungsvorrichtung 26 hineingeschwenkt werden, in welcher eine Reihe von Wasser- Hochdruckdüsen 27 wirksam ist. Nach Verlassen der Hochdruckdüsen-Stationen 27 werden die Schablonen 17 mit Warm- und ggf. auch mit Kaltluft getrocknet. Die musterbildenden Öffnungen der Schablonen sind mit den Bezugsziffern 28 bzw. 29 versehen.

Fig. 4 zeigt eine zwei Musterteig-Sprühdüsen 23, 23 enthaltende Doppeldüse, die gleichzeitig in der mit d bezeichneten Position der Backkette 11 sowohl die obere Backfläche 24 als auch die untere Backfläche 25 derselben Backform 12 mit Musterteig besprühen kann. Auf diese Weise enthält die später fertiggebackene Waffel sowohl oben als auch unten je ein Muster.

Beide Schablonen 17 gemäß Fig. 4 sind etwa nach Art eines Buches, und zwar über ein Scharnier 30, klappbar aneinander angelenkt. Distanzstifte 36 stützen sich hierbei an den Backflächen 24, 25 ab und sorgen so für einen den Sprühvorgang befördernden optimalen Parallelabstand der beiden Schablonen 17 von den Backflächen 24, 25.

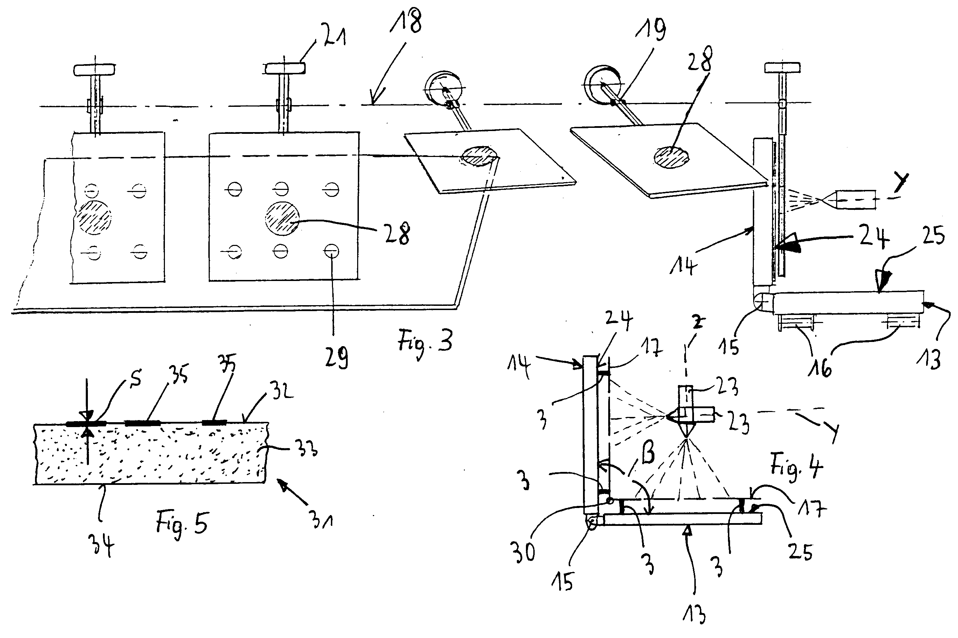

Fig. 5 mit einem Querschnitt durch eine fertige Waffel 31 zeigt, daß beispielsweise die obere Breitfläche 32 der dicken Hauptteigschicht 33 hauchdünne musterbildende Musterteigschichten 35 trägt, deren Stärke s etwa 0,05 mm ausmacht. Eine in Anwendung des Ausführungsbeispiels gemäß Fig. 4 erbackene Waffel 31 würde auch an der unteren Breitfläche 34 entsprechend hauchdünne Musterteigschichten 35 ergeben.

Ergänzend wird noch bemerkt, daß die Mittellängsachsen der Düsen 23 mit y bzw. z bezeichnet sind. Die beiden Schablonen 17 und die beiden Backflächen 24, 25 gemäß Fig. 4 bilden jeweils einen rechten Winkel β miteinander.

Die Spritzdüse 23 kann in Bewegungsrichtung x der kontinuierlich umlaufenden Kette 11 synchron mitgeführt werden (während des Sprühvorgangs) und anschließend wieder entgegen x zurückgeführt werden. In diesem Falle wird auch die Schablonenkette 18 synchron zur Kette 11 bewegt. Ein diskontinuierlicher bzw. taktweiser Synchronbetrieb der beiden Ketten 11, 18 ist ebenfalls denkbar. In einem solchen Falle könnte die Sprühdüse 23 raumfest (hierbei ggf. oszillierend) an der Position d angeordnet sein.

Die Musterteig-Düse 23 kann als Zweistoffdüse ausgebildet sein, welche den dünnflüssigen Musterteig unter Zugabe eines Gases, vorzugsweise Luft, verprüht. Grundsätzlich ist es ebenfalls möglich, Einstoffdüsen zu verwenden, welche bei entsprechendem Druck eine hinreichende Sprühverteilung des flüssigen Musterteiges gestatten.

## Patentansprüche

1. Verfahren zum Herstellen von Waffeln, wie Einzelwaffeln od.dgl., bei welchem zunächst ein Musterteig auf mindestens eine Backfläche der eine untere und eine obere Backfläche aufweisenden Backform aufgebracht und zeitlich danach ein bezüglich des Musterteiges eine unterschiedliche Viskosität aufweisender Hauptteig auf eine Backfläche aufgegossen wird und wobei zeitlich vor oder mit Schließen der Backform die beiden Teige miteinander in Verbindung gebracht werden, dadurch gekennzeichnet, daß der Hauptteig eine größere und der Musterteig eine seine Versprühbarkeit ermöglichende geringere Viskosität aufweisen, wobei der Musterteig als verlauffreie hauchdünne Schicht aufgesprüht wird und daß der Hauptteig, der auf die untere Backfläche aufgegossen wird, mit dem Musterteig verbunden wird, solange der Musterteig noch auf seiner Backfläche haftet.

2. Verfahren nach Anspruch 1, dadurch gekennzeichnet, daß der Musterteig taktweise versprüht wird.

3. Verfahren nach Anspruch 1 oder nach Anspruch 2, dadurch gekennzeichnet, daß der Musterteig bahnenweise auf die Backfläche gesprüht wird.

4. Verfahren nach einem der vorangehenden Ansprüche, dadurch gekennzeichnet, daß das Aufsprühen des Musterteiges mittels einer oszillierenden Bewegung durchgeführt wird.

5. Verfahren nach einem der vorangehenden Ansprüche, dadurch gekennzeichnet, daß der Musterteig durch je eine Schablone hindurch auf die Backfläche gesprüht wird.

6. Verfahren nach Anspruch 5, dadurch gekennzeichnet, daß bei bewegten Backformen vor dem Schließen derselben die Schablone synchron über eine kurze Wegstrecke mit der Backform mitgeführt und auf dieser Wegstrecke der Musterteig auf die Backfläche gesprüht wird.

7. Verfahren nach Anspruch 5 oder nach Anspruch 6, dadurch gekennzeichnet, daß die Schablone an die untere und/oder an die obere Backfläche mit einem geringen Abstand angelehnt und hierbei der Musterteig auf die jeweils benachbarte Backfläche gesprüht wird.

8. Verfahren nach einem der vorangehenden Ansprüche, dadurch gekennzeichnet, daß eine Schablone an die obere und eine zweite Schablone an die untere Backfläche, angelehnt und zur gleichen Zeit von dem Musterteig durchsprüht werden.

9. Verfahren nach einem der vorangehenden Ansprüche, dadurch gekennzeichnet, daß die ge Schablone nach dem Aufsprühen des Musterteigs aus der Bewegungsbahn der offenen Backform herausgeführt wird.

10. Verfahren nach einem der vorangehenden Ansprüche, dadurch gekennzeichnet, daß die Schablonen nach dem Sprühvorgang einem Reinigungskreislauf zugeführt werden.

11. Vorrichtung zur Durchführung des Verfahrens gemäß den Ansprüchen 1 bis 10, mit über eine Wegstrecke bewegbaren Backformen, welche jeweils eine untere Backplatte und eine obere Backplatte aufweisen, wobei die Backformen in geöffnetem Zustand zunächst von einer Musterteigaufgabe und danach vor dem Schließen der Backform mittels einer Schließmechanik vor dem Passieren eines Ofens mittels einer Hauptteigaufgabe beaufschlagbar sind, dadurch gekennzeichnet, daß die Backfläche (24, 25) der jeweiligen Backplatte (13, 14) mittels einer den Musterteig versprühenden Sprühdüse (23) beaufschlagbar ist.

12. Vorrichtung nach Anspruch 11, dadurch gekennzeichnet, daß zur Beaufschlagung mehrerer Backformen-Bahnen mehrere Sprühdüsen (23) versetzt nebeneinander angeordnet sind.

13. Vorrichtung nach Anspruch 11 oder nach Anspruch 12, dadurch gekennzeichnet, daß zwischen der zu beaufschlagenden Backfläche (24, 25) der offenen Backform (12) und Sprühdüse (23) eine Schablone (17) angeordnet ist.

14. Vorrichtung nach Anspruch 13, dadurch gekennzeichnet, daß die Schablone (17) parallel zu der zu beaufschlagenden Backfläche (24, 25) und die Mittellängsachse (z, y) der Sprühdüse (23) orthogonal zu der zugehörigen Backfläche (25, 24) ausgerichtet sind.

15. Vorrichtung nach einem der vorangehenden Ansprüche, dadurch gekennzeichnet, daß beide Backflächen (24, 25) einer Backform (12) im geöffneten Zustand einen rechten Winkel (β) zwischen sich bilden, wobei in Anpassung an diese Winkelstellung zwei Schablonen (17) über ein Scharnier (30) miteinander verbunden sind und wobei die Achse des Scharniers (30) parallel zur Achse des Klappgelenks (15) der Backform (12) gehalten ist.

16. Vorrichtung nach einem der vorangehenden Ansprüche, dadurch gekennzeichnet, daß jede Schablone (17) mittels Abstandshalter (36) von der zu besprühenden Backfläche (24 bzw. 25) im Parallelabstand gehalten ist.

17. Vorrichtung nach einem der vorangehenden Ansprüche, dadurch gekennzeichnet, daß aneinandergekuppelte Schablonen (17) eine umlaufend geführte Schablonenkette (18) bilden.

18. Vorrichtung nach einem der vorangehenden Ansprüche, dadurch gekennzeichnet, daß die über eine Antriebskette (18) aneinandergekuppelten Schablonen (17) gelenkig (bei 19) an der Antriebskette (18) angeordnet und jeweils mittels einer Kulissenrolle (21) bzw. mittels eines Kulissensteines und einer zugehörigen Kulissenführung (22) in die Bewegungsbahn einer Backform (12), und damit in die Schablonen-Sprühstellung (Pos. d) hineinschwenkbar und aus der Bewegungsbahn der Backform (12) herausschwenkbar sind.

19. Vorrichtung nach einem der vorangehenden Ansprüche, dadurch gekennzeichnet, daß die umlaufenden Schablonen (17) im Anschluß an die Sprühstellung (d) mittels der Kulissensteine bzw. der Kulissenrollen (21) und zugehöriger Kulissenführungen (22), in eine Reinigungsvorrichtung (26) einschwenkbar sind.

20. Vorrichtung nach Anspruch 19, dadurch gekennzeichnet, daß die Reinigungsvorrichtung (26) eine Naßbeaufschlagung mittels Hochdruckdüsen (27) und eine anschließende Trocknung mittels Heißluft und gegebenenfalls mittels Kaltluft, beinhaltet.

21. Waffel, wie Einzelwaffel od.dgl. mit einem Hauptwaffelkörper aus einem Hauptteig sowie mit einer auf dem Hauptwaffelkörper aufsitzenden, ein Muster bildenden Schicht aus gebackenem Musterteig, entsprechend den Verfahrensansprüchen 1-10 sowie entsprechend den Vorrichtungsansprüchen 11-20 hergestellt, dadurch gekennzeichnet, daß der Musterteig eine im Verhältnis zur Hauptteigschicht (33) hauchdünne Musterteig-Schicht (35) bildet, deren Stärke etwa 0,04-0,08 mm, vorzugsweise 0,06-0,08 mm, beträgt.

22. Waffel nach Anspruch 21, dadurch gekennzeichnet, daß der Musterteig etwa 4-6 Gewichtsprozent Natron enthält.

23. Waffel nach Anspruch 21, dadurch gekennzeichnet, daß der Musterteig etwa 5-10 Gewichtsprozent Milchzucker enthält.

24. Waffel nach Anspruch 21, dadurch gekennzeichnet, daß der Musterteig bis zu etwa 4 Gewichtsprozent Natron und bis zu etwa 3 Gewichtsprozent Milchzucker, vorzugsweise etwa 5 Gewichtsprozent Natron und 5 Gewichtsprozent Milchzucker enthält.

## Claims

1. A method of producing wafers, such as individual wafers or the like, in which a pattern batter is first applied to at least one baking surface of the baking mould, having a lower and an upper baking surface, and then a main batter, having a different viscosity with respect to the pattern batter, is poured onto a baking surface and wherein, before or at the same time as the closing of the baking mould, the two batters are brought into connection with one another, characterised in that the main batter has a higher viscosity and the pattern batter has a lower viscosity enabling its sprayability, wherein the pattern batter is sprayed in the form of a non-running, paper-thin layer, and that the main batter, which is poured onto the lower baking surface, is bonded to the pattern batter, as long as the pattern batter is still adhering to its baking surface.

2. A method according to claim 1, characterised in that the pattern batter is sprayed in a pulsed manner.

3. A method according to claim 1 or claim 2, characterised in that the pattern batter is sprayed in strips onto the baking surface.

4. A method according to one of the preceding claims, characterised in that the pattern batter is sprayed by means of an oscillating movement.

5. A method according to one of the preceding claims, characterised in that the pattern batter is sprayed through a template onto the baking surface.

6. A method according to claim 5, characterised in that, as the baking moulds are moved before the closing thereof, the template is moved in synchronism with the baking mould over a short distance and, at the same time, the pattern batter is sprayed onto the baking surface over this distance.

7. A method according to claim 5 or claim 6, characterised in that the template is leaned against the lower and/or the upper baking surface, at a short distance therefrom, and, at the same time, the pattern batter is sprayed onto the adjacent baking surface in each case.

8. A method according to one of the preceding claims, characterised in that one template is leaned against the upper baking surface and a second template is leaned against the lower baking surface and, at the same time, the pattern batter is sprayed through said templates.

9. A method according to one of the preceding claims, characterised in that the template is removed from the path of movement of the open baking mould after the spraying of the pattern batter.

10. A method according to one of the preceding claims, characterised in that the templates are sent to a cleaning circuit after the spraying operation.

11. A device for implementing the method according to claims 1 to 10, with baking moulds which are movable over a distance, each of which has a lower baking plate and an upper baking plate, wherein the baking moulds in the opened state are coatable, firstly with an application of pattern batter and then, before the closing of the baking mould by means of a closing mechanism, are coatable by means of an application of main batter before passing through an oven, characterised in that the baking surface (24, 25) of each baking plate (13, 14) is coatable by means of a spraying nozzle (23) spraying the pattern batter.

12. A device according to claim 11, characterised in that, in order to coat several baking mould lines, several spraying nozzles (23) are arranged, off-set, next to one another.

13. A device according to claim 11 or claim 12, characterised in that a template (17) is arranged between the baking surface (24, 25) to be coated of the open baking mould (12) and the spraying nozzle (23).

14. A device according to claim 13, characterised in that the template (17) is aligned parallel to the baking surface (24, 25) to be coated and the central longitudinal axis (z, y) of the spraying nozzle (23), orthogonal to the associated baking surface (25, 24).

15. A device according to one of the preceding claims, characterised in that the two baking surfaces (24, 25) of a baking mould (12) in the opened state form a right angle (β) between one another, wherein, in order to adapt to this angular position, two templates (17) are connected to one another via a hinge (30) and wherein the axis of the hinge (30) is held parallel to the axis of the hinged joint (15) of the baking mould (12).

16. A device according to one of the preceding claims, characterised in that each template (17) is held, by means of spacers (36), at a parallel distance from the baking surface (24 or 25) to be sprayed.

17. A device according to one of the preceding claims, characterised in that templates (17), coupled to one another, form a rotating template chain (18).

18. A device according to one of the preceding claims, characterised in that the templates (17), coupled to one another via a driving chain (18), are arranged hinged (at 19) to the driving chain (18) and are each pivotable into the path of movement of a baking mould (12), and thus into the template spraying position (position d) and are pivotable out of the path of movement of the baking mould (12) by means of a link roller (21) or by means of a link block and an associated link guide (22).

19. A device according to one of the preceding claims, characterised in that the rotating templates (17), after the spraying position (d), are pivotable into a cleaning device (26) by means of the link blocks or the link rollers (21) and associated link guides (22).

20. A device according to claim 19, characterised in that the cleaning device (26) contains a wet treatment by means of high pressure nozzles (27) and subsequent drying by means of hot air and optionally by means of cold air.

21. A wafer, such as individual wafers or the like, with a main wafer body made of a main batter and with a layer made of baked pattern batter, forming a pattern, seated on the main wafer body, produced according to the method claims 1 - 10 and according to device claims 11 - 20, characterised in that the pattern batter forms a paper-thin pattern batter layer (35) in comparison to the main batter layer (33), the thickness of said pattern batter layer (35) being approximately 0.04 - 0.08 mm, preferentially 0.06 - 0.08 mm.

22. A wafer according to claim 21, characterised in that the pattern batter contains approximately 4 - 6 per cent by weight of bicarbonate of soda.

23. A wafer according to claim 21, characterised in that the pattern batter contains approximately 5 - 10 per cent by weight of lactose.

24. A wafer according to claim 21, characterised in that the pattern batter contains up to approximately 4 per cent by weight of bicarbonate of soda and up to approximately 3 per cent by weight of lactose, preferentially approximately 5 per cent by weight of bicarbonate of soda and 5 per cent by weight of lactose.

## Revendications

1. Procédé pour la fabrication de gaufres, telles que des gaufres individuelles, dans lequel on applique d'abord une pâte de modèle sur au moins une surface de cuisson d'un moule de cuisson présentant une surface inférieure de cuisson et une surface supérieure de cuisson et dans lequel, à un moment ultérieur, on coule sur une surface de cuisson une pâte principale, présentant une viscosité différente de celle de la pâte de modèle et où, à un moment antérieur ou simultané à la fermeture du moule de cuisson, on met en liaison les deux pâtes,
caractérisé en ce que la pâte principale présente une viscosité assez élevée et la pâte de modèle présente une faible viscosité permettant de la pulvériser, la pâte de modèle étant appliquée par pulvérisation sous la forme d'une couche ayant la minceur d'un film, permettant d'épouser toutes les formes et en ce que la pâte principale, coulée sur la surface inférieure de cuisson, est reliée à la pâte de modèle pendant que cette pâte de modèle adhère encore sur sa surface de cuisson.

2. Procédé selon la revendication 1,
caractérisé en ce que la pâte de modèle est pulvérisée de façon cadencée.

3. Procédé selon la revendication 1 ou la revendication 2,
caractérisé en ce que la pâte de modèle est appliquée par pulvérisation, par bandes, sur la surface de cuisson.

4. Procédé selon l'une des revendications précédentes,
caractérisé en ce que l'application par aspersion de la pâte de modèle est effectuée au moyen d'un mouvement oscillatoire.

5. Procédé selon l'une des revendications précédentes,
caractérisé en ce que la pâte de modèle est appliquée, par pulvérisation à travers un gabarit, sur la surface de cuisson.

6. Procédé selon la revendication 5,
caractérisé en ce que lorsque les moules de cuisson sont déplacés, avant leur fermeture, le gabarit est entraîné de façon synchrone sur une petite course, conjointement avec le moule de cuisson, et que la pâte de modèle est appliquée par pulvérisation sur la surface de cuisson, au cours de ce déplacement.

7. Procédé selon la revendication 5 ou la revendication 6,
caractérisé en ce que le gabarit est placé sur la surface de cuisson inférieure et/ou supérieure, à faible distance, et que la pâte de modèle est appliquée par pulvérisation sur la surface de cuisson chaque fois voisine.

8. Procédé selon l'une des revendications précédentes,
caractérisé en ce qu'un gabarit est appliqué sur la surface de cuisson supérieure et qu'un deuxième gabarit est appliqué sur la surface de cuisson inférieure, la pulvérisation avec la pâte de modèle étant effectuée simultanément.

9. Procédé selon l'une des revendications précédentes,
caractérisé en ce que le gabarit est guidé après application par pulvérisation de la pâte de modèle, pour l'écarter de la trajectoire de déplacement du moule de cuisson ouvert.

10. Procédé selon l'une des revendications précédentes,
caractérisé en ce que les gabarits sont ramenés dans un circuit de nettoyage après le processus de pulvérisation.

11. Dispositif pour la mise en oeuvre du procédé selon les revendications 1 à 10, avec des moules de cuisson déplaçables sur une course, présentant chacun une plaque de cuisson inférieure et une plaque de cuisson supérieure, les moules de cuisson étant exposés, à l'état ouvert, d'abord à une application de pâte de modèle, puis, sont exposés à une application de pâte principale, avant fermeture du moule de cuisson, au moyen d'un mécanisme de fermeture, avant le passage dans un four,
caractérisé en ce que la surface de cuisson (24, 25) de la plaque (13, 14) afférente peut être soumise à une pulvérisation de pâte de modèle au moyen d'une buse de pulvérisation (23).

12. Dispositif selon la revendication 11,
caractérisé en ce que plusieurs buses de pulvérisation (23) sont disposées, décalées les unes à côtés des autres, pour pouvoir effectuer une application sur plusieurs bandes de moule de cuisson.

13. Dispositif selon la revendication 11 ou la revendication 12,
caractérisé en ce qu'un gabarit (17) est disposé entre la surface de cuisson (24, 25) à traiter du moule (12) ouvert et la buse de pulvérisation (23).

14. Dispositif selon la revendication 13,
caractérisé en ce que le gabarit (17) est orienté parallèlement à la surface de cuisson (24, 25) à traiter et que l'axe longitudinal médian (z, y) de la buse de pulvérisation (23) est tourné perpendiculairement par rapport à la surface de cuisson (25, 24) correspondante

15. Dispositif selon l'une des revendications précédentes,
caractérisé en ce que les deux surfaces de cuisson (24, 25) d'un moule de cuisson (12) forment entre elles à l'état ouvert un angle droit (β), deux gabarits étant reliés ensemble par une charnière (30), pour venir s'adapter à cette position angulaire, et l'axe de la charnière (30) étant fixé parallèlement à l'axe de l'articulation de rabattement (15) du moule (12) de cuisson.

16. Dispositif selon l'une des revendications précédentes,
caractérisé en ce que chaque gabarit (17) est fixé au moyen d'éléments d'écartement (36), à une distance donnée et parallèlement par rapport à la surface de cuisson (24, respectivement 25) à traiter par pulvérisation.

17. Dispositif selon l'une des revendications précédentes,
caractérisé en ce que des gabarits (17) couplés les uns aux autres constituent une chaîne de gabarits (18) guidée en un mouvement circulatoire.

18. Dispositif selon l'une des revendications précédentes,
caractérisé en ce que les gabarits (17), couplés les uns aux autres par l'intermédiaire d'une chaîne d'entraînement (18), sont disposés de façon articulée (en 19) sur la chaîne d'entraînement (18) et peuvent être tournés chaque fois au moyen d'un galet à coulisse (21), respectivement au moyen d'un patin à coulisse et d'un guidage à coulisse (22) associé, dans la trajectoire de déplacement d'un moule 12) de cuisson et, ainsi, dans la position de pulvérisation des gabarits (position d) et qu'ils peuvent être pivotés pour être écartés de la trajectoire de déplacement du moule (12) de cuisson.

19. Dispositif selon l'une des revendications précédentes,
caractérisé en ce que les gabarits (17) mis en circulation peuvent être pivotés, suite à la position de pulvérisation (d), dans un dispositif de nettoyage (26), au moyen des patins à coulisse, respectivement des galets à coulisse (21) et de guidages à coulisse (22) associés.

20. Dispositif selon la revendication 19,
caractérisé en ce que le dispositif de nettoyage (26) effectue un traitement humide, à l'aide de buses hautepression (27), et un séchage subséquent, au moyen d'air chaud et, le cas échéant, au moyen d'air froid.

21. Gaufre, telle que gaufre individuelle ou analogue avec un corps de gaufre principal, obtenu à partir d'une pâte principale, ainsi qu'avec une couche, reposant sur le corps de gaufre principal et formant un motif, réalisée en une pâte de modèle cuite, fabriquée selon les étapes de procédé 1 à 10, ainsi que fabriquée selon les revendications 11 à 20 concernant le dispositif,
caractérisée en ce que la pâte de modèle constitue une couche de pâte de modèle (35) ayant l'épaisseur d'un film par rapport à la couche de pâte principale (33) et dont l'épaisseur est d'à peu près 0,04 à 0,05 mm, de préférence de 0,06 à 0,08 mm.

22. Gaufre selon la revendication 21,
caractérisée en ce que la pâte de modèle contient environ 4 à 6 % en poids de bicarbonate de sodium.

23. Gaufre selon la revendication 21,
caractérisée en ce que la pâte de modèle contient à peu près 5 à 10 % en poids de lactose.

24. Gaufre selon la revendication 21,
caractérisée en ce que la pâte de modèle contient à peu près 4 % en poids de bicarbonate de sodium et jusqu'à environ 3 % en poids de lactose, de préférence à peu près 5 % en poids de bicarbonate de sodium et 5 % en poids de lactose.
